# EUROPEAN PATENT SPECIFICATION

(11) **EP 1 432 199 B1**
(45) Date of publication and mention of the grant of the patent: **12.07.2006**
(21) Application number: 03009891.7
(22) Date of filing: 15.05.2003
(51) Int. Cl.: H04L 29/06, H04L 12/22

(54) **Grouping apparatus, grouping program of communication devices**
Anlage und Programm zum Gruppieren von Kommunikationsgeräten
Appareil et programme pour grouper des dispositifs de transmission

(30) Priority: 16.12.2002 JP 2002364063
(43) Date of publication of application: 23.06.2004
(73) Proprietor: MITSUBISHI DENKI KABUSHIKI KAISHA, Chiyoda-ku Tokyo 100-8310 (JP)
(72) Inventor: Narikawa, Masafumi, Chiyoda-ku, Tokyo 100-8310 (JP)
(74) Representative: HOFFMANN EITLE

(56) References cited:
- EP-A- 1 069 728

## Description

### Background of the Invention

### 1. FIELD OF THE INVENTION

The present invention relates to a grouping apparatus, grouping method and grouping program of communication devices respectively performing a function of implementing grouping of a plurality of specific communication devices easily as well as safely in a communication system having a communication medium for common use in a plurality of communication devices such as Ethernet (registered trademark), wireless LAN, power-line carrier communication or the like.

### 2. DESCRIPTION OF THE RELATED ART

In a conventional communication device system, as a method for grouping a plurality of specific communication devices, a button of one communication device is used among those communication devices intended to be grouped, and a specific operation pattern (sequence) is registered in terms of number of times of depressing the button in a predetermined time period and timing thereof. To additionally register a communication device intended to participate in a secure group, a button of the communication device intended to add is operated following a specific operation pattern having been registered at the beginning (see, for example, the Japanese Patent Publication (unexamined) No. 36638/2001 or EP 1 069 728 A2).

In the above-mentioned conventional communication device system, a complicated button operation is required every time a communication device is additionally registered in a secure group, resulting in a problem of taking a long time to group a large number of communication devices.

Further, operation pattern for additionally registering a communication device in a secure group is complicated, resulting in another problem that it is difficult to record and store an operation pattern for an additional registration.

In the case where there is any lag between timing of depressing a button at the time of operation for additionally registering a communication device in a secure group and a specific timing registered at the beginning, they are not determined as the same operation pattern. Thus a further problem exists in that a communication device cannot be additionally registered in a secure group.

Moreover, in the case where an operation pattern for additionally registering a communication device in a secure group is leaked, a still further problem exists in that any third party may register the other communication devices in the secure group, and steals a look at communication information.

### SUMMARY OF THE INVENTION

The present invention was made to solve the above-mentioned problems, and has an object of providing a grouping apparatus of communication devices, grouping method of communication devices and grouping program of communication devices respectively performing a function to be capable of grouping a plurality of specific communication devices easily as well as safely.

This object is achieved by a grouping apparatus having the features of claim 1.

This object is further achieved by a grouping method and grouping program having the features of claims 9 and 12, respectively.

A grouping apparatus of communication devices is relevant to a communication system, in which a plurality of communication devices are connected respectively via a communication medium and capable of communicating with each other. This grouping apparatus includes: an input section for generating a participation request signal in response to a participation request for participation in a secure group in order to keep communication between a plurality of specific communication devices secret; a receiving section for receiving the participation request signal for participation in the mentioned secure group, the participation request signal being transmitted from a transmission section of any of the other communication devices and generated by an input section of the other mentioned communication devices; a processing section for fetching out an ID information of the other mentioned communication devices from which the participation request is transmitted from the mentioned participation request signal received by the mentioned receiving section; a storage section for storing the ID information of the other mentioned communication devices, which has been fetched out by the mentioned processing section, and one's ID information; a sequence determination section for detecting a time sequence of inputs from one's communication device and the other mentioned communication devices to the input section that generates the mentioned participation request signal; and a control section for implementing constitution of a secure group between the one' s mentioned communication device and the other mentioned communication devices when a time sequence of the inputs from one' s communication device and the other mentioned communication devices to the mentioned input section meets a predetermined specific rule.

In the mentioned grouping apparatus of communication devices, grouping of a plurality of specific communication devices can be carried out easily as well as safely.

A grouping method of communication devices includes the steps of: inputting a participation request for participation in a secure group in order to keep communication between a plurality of specific communication devices secret and generating a participation request signal; receiving the participation request signal transmitted in response to an input of the participation request for participation in the mentioned secure group from any of the other communication devices; fetching out an ID information of the other mentioned communication devices, from which the participation request is transmitted, from the mentioned received participation request signal; storing the mentioned fetched-out ID information of the other communication devices and one's ID information; detecting a time sequence of inputs that generate the mentioned participation request signal from one' s communication device and the other mentioned communication devices; and implementing constitution of a secure group between the one' s mentioned communication device and the other mentioned communication devices when the mentioned time sequence of the inputs meets a predetermined specific rule.

In the mentioned grouping method of communication device, grouping of a plurality of specific communication devices can be carried out easily as well as safely.

A grouping program of communication devices includes the steps of: generating a participation request signal as well as generating one's ID information of the mentioned communication device in response to an input of a participation request for participation in a secure group in order to keep communication between a plurality of specific communication devices secret; fetching out an ID information of the other mentioned communication devices, from which the participation request is transmitted, from the mentioned participation request signal in response to receipt of the participation request signal, the participation request signal being inputted and transmitted from the other communication devices for participation in the mentioned secure group; storing the mentioned fetched-out ID information of the other communication devices and one's ID information; detecting a time sequence of inputs that generate the mentioned participation request signal from one's communication device and the other mentioned communication devices; and implementing constitution of a secure group between the one' s mentioned communication device and the other mentioned communication devices when the mentioned time sequence of the input meets a predetermined specific rule.

In the mentioned grouping program of communication devices, grouping of a plurality of specific communication devices can be carried out easily as well as safely.

The foregoing and other features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram showing a constitution of a modem provided with a grouping apparatus of communication devices according to a first preferred embodiment of the present invention.
Fig. 2 is a block diagram of a communication system constituted of the modems shown in Fig. 1.
Fig. 3 is a flowchart showing an operating procedure of grouping according to the first embodiment.
Fig. 4 is a flowchart showing operation in an internal part of the modem according to the first embodiment.
Fig. 5 is a flowchart showing operation in the internal part of the modem according to the first embodiment.
Fig. 6 is a flowchart showing operation in the internal part of the modem according to the first embodiment, and Figs. 4-6 show complete one flowchart.
Fig. 7 is a flowchart showing operation in the internal part of the modem according to the first embodiment.
Fig. 8 is a block diagram showing a constitution of a modem according to a second embodiment.
Fig. 9 is a flowchart showing operation in an internal part of the modem according to the second embodiment.
Fig. 10 is a flowchart showing operation in the internal part of the modem according to the second embodiment.
Fig. 11 is a block diagram showing a constitution of a modem according to a third embodiment.
Fig. 12 is a flowchart showing operation in an internal part of the modem according to the third embodiment.
Fig. 13 is a flowchart showing operation in the internal part of the modem according to the third embodiment.
Fig. 14 is a block diagram showing a constitution of a modem according to a fourth embodiment.
Fig. 15 is a flowchart showing operation in an internal part of the modem according to the fourth embodiment.

### DESCRIPTION OF THE PREFERRED EMBODIMENTS

### Embodiment 1.

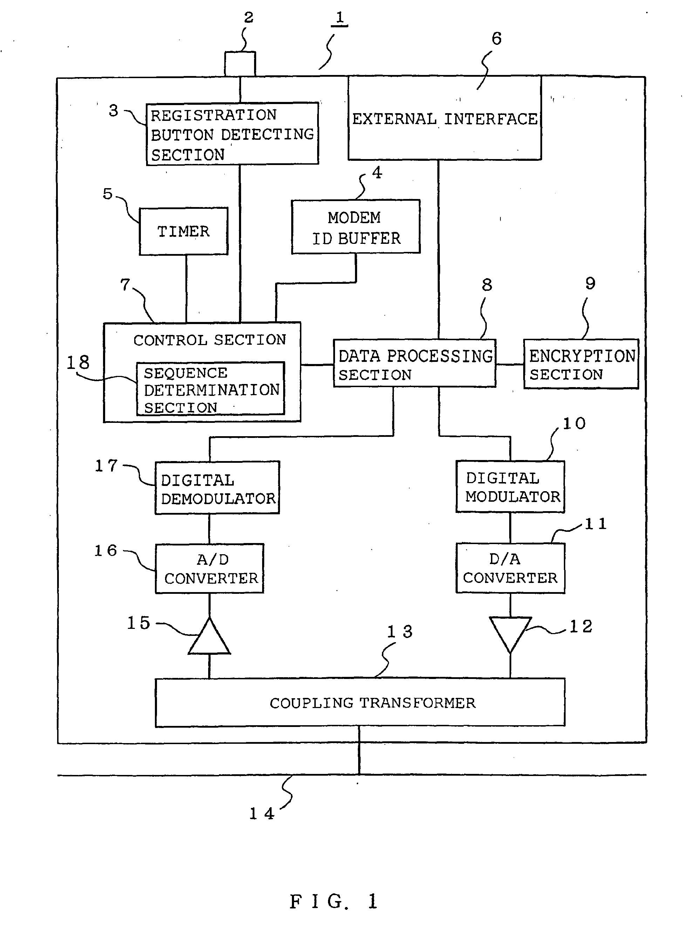

Fig. 1 is a block diagram showing a constitution of a modem provided with a grouping apparatus of communication devices according to a first preferred embodiment of the invention. A modem 1 includes a secure group registration button 2 (hereinafter referred to as a registration button), a secure group registration button detecting section 3 (hereinafter referred to as a registration button detecting section), and a modem ID buffer (storage section) 4. The modem 1 also includes a timer 5, an external interface 6, a control section 7, a data processing section 8, an encoding section 9, a digital modulator 10, a D/A converter 11, a transmission amplifier 12, a coupling transformer 13, a communication line 14, a receiving amplifier 15, an A/D converter 16, a digital demodulator 17, and a sequence determination section 18.

The modem 1 is connected to the communication line 14 acting as a communication medium and communicates to the other communication device (communication device provided in the other modem). The external interface 6 connects the modem 1 to, e.g., an external personal computer. The registration button (input section) 2 includes a push-button, a jog dial or the like and, with this registration button 2, a registration start (participation request) of the modem 1 in a secure group, or registration (participation request) of the modem 1 in a secure group is inputted. The registration button detecting section (input section) 3 detects that the registration button 2 is depressed, and transmits a participation request signal to the control section 7. The registration button 2 and the registration button detecting section 3 form an input section. The modem ID buffer (storage section) 4 is controlled by the control section 7, and records modem ID information of one's modem and the other modem making the registration request (participation request) in the secure group. The timer 5 includes a program for carrying out a time measurement, a CPU for executing the program, and the like. Further, the timer 5 measures a time period in response to an instruction from the control section 7, and transmits occurrence of a timeout to the control section 7 at the time of the occurring the timeout. The encoding section 9 includes a program for encoding, a CPU for executing the program and the like, and performs encoding of information in response to the instruction from the control section 7.

The control section 7 includes a storage section, and this storage section is comprised of a flash RAM memory, a hard disk and the like, which is capable of holding information even if a power supply is interrupted. The control section 7 also includes a control program, a CPU for executing the program and the like, possesses a function of generating one's ID information required for grouping based on the signal from the registration button detecting section 3 (participation request signal), and conducts management and control of each section. The data processing section 8 is controlled by the control section, and produces or processes data transmitted and received by the modem 1. The digital modulator10 modulates data transmitted from the data processing section 8, and generates a digital transmission signal. The D/A converter 11 converts the digital transmission signal, which is generated by the digital modulator 10, into an analog transmission signal. The transmission amplifier 12 amplifies the analog transmission signal converted by the D/A converter 11.

The coupling transformer 13 connects the analog transmission signal, which is amplified by the transmission amplifier 12, to the communication line 14, and receives an analog received signal from the communication line 14 as well. The digital modulator 10, the D/A converter 11, the transmission amplifier 12 and the coupling transformer 13 form a transmission section. The receiving amplifier 15 amplifies the analog received signal, which is received by the coupling transformer 13. The A/D converter 16 converts the analog received signal, which is amplified by the receiving amplifier 15, into a digital received signal. The digital demodulator 17 demodulates the digital received signal, which is converted by the A/D converter 16, into a digital received data. The coupling transformer 13, the receiving amplifier 15, the A/D converter 16, and the digital demodulator 17 form a receiving section. In addition, in the case where a communication medium is not wired, the transmission amplifier 12 is connected to an antenna, and signal is transmitted to outside; and the receiving amplifier 15 is connected to the antenna as well, and an external signal is received. The sequence determination section 18 determines whether or not a time sequence of inputs to the input section for generating a participation request signal from one's communication device and the other communication device meets a predetermined specific rule.

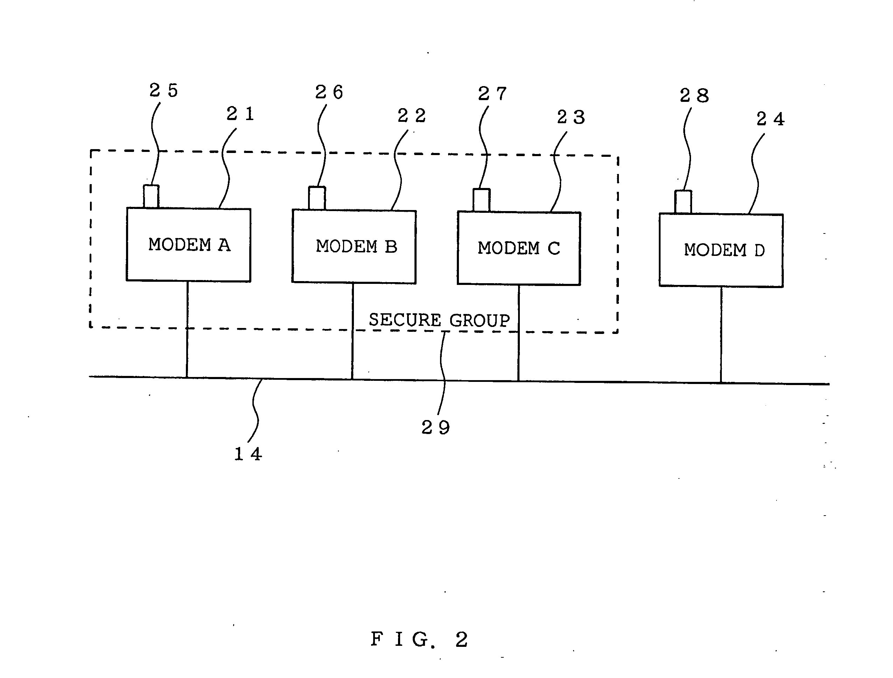

Fig. 2 is a block diagram of a communication system constituted of the modems shown in Fig. 1. Modem A 21, modem B 22, modem C 23 and modem D 24 are connected to the communication line 14 respectively. The modem A 21 is provided with a registration button 25. Likewise, the modem B 22, modem C 23 and modem D 24 are provided with a registration button 26, a registration button 27 and a registration button 28 respectively. The modem A 21, modem B 22 and modem C 23 are registered in a secure group.

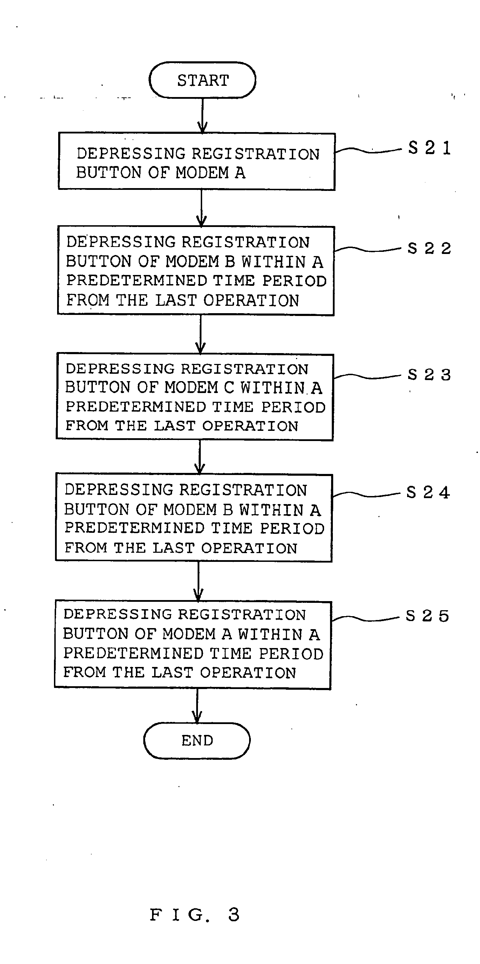

Now, a registration operation (participation request operation) according to a first preferred embodiment is hereinafter described with reference to Fig. 3, which is a flowchart for explaining an operation of registering the modem A, modem B and modem C, shown in Fig. 2, in a secure group. First, in step S21, the registration button 25 of the modem A is depressed. Subsequently, in step S22, the registration button 26 of the modem B is depressed within a predetermined time period from the last (previous) operation. Then, in step 23, the registration button 27 of the modem C is depressed within a predetermined time period from the last operation. In step S24, the registration button 26 of the modem B is also depressed within a predetermined time period from the last operation. In step S25, the registration button 25 of the modem A is depressed also within a predetermined time period from the last operation. By conducting the above-mentioned operations, the modem A, modem B and modem C come to be registered in the secure group 29.

In addition, in the above-mentioned registration operation, respective registration buttons are depressed sequentially in order of the modem A-B-C-B-A. However, this registration operation is sufficient as far as the registration buttons are depressed in the latter part in reverse order from the former part. Even in the case where the registration buttons are depressed in sequential order of, for example, B-C-A-C-B, C-A-B-A-C, A-C-B-C-A or B-A-C-A-B, the modem A, modem B and modem C are registered in a secure group. That is, when a time sequence of inputs to the input section (registration button) of one's communication device and the other communication devices meets a rule of sequence beginning from one's communication device, turning back at the other communication device which is the last one to participate in the secure group, and returning to one's communication device in reverse order thereof, it may be said that the time sequence of the inputs satisfies a predetermined specific rule. Accordingly, constitution of a secure group between one's communication device and the other communication device is implemented.

Further, constitution of a secure group between one's communication device and the other communication devices is preferably implemented when sequence of a registration operation, that is, a time sequence of inputs to an input section (registration button) of one's communication device and the other communication devices meets a predetermined specific rule. For example, as a sequence of A-B-C-C-B-A, it is also preferable that constitution of a secure group between one's communication device and the other communication devices is implemented when a time sequence of inputs to the input section of one's communication device and the other communication devices meets a rule of sequence beginning from one's communication device, turning back at the other communication device which is the last one to participate in a secure group after double inputs to the input section thereat, and returning to one's communication device in reverse order.

Furthermore, as a sequence of A-B-C-A-B-C, it is also preferable that constitution of a secure group between one's communication device and the other communication devices is implemented when a time sequence of inputs to an input section of one's communication device and the other communication devices meets a rule of sequence of repeating the sequence beginning from one' s communication device and ending at the other communication device which is the last one to participate in the secure group.

Now, an example is hereinafter described about constitution of a secure group between one's communication device and the other communication devices is implemented when a time sequence of inputs to an input section (registration button and registration button detecting section) of one's communication device and the other communication devices meets a rule of sequence beginning from one's communication device, turning back at the other communication device which is the last one to participate in the secure group, and returning to one's communication device in reverse order thereof.

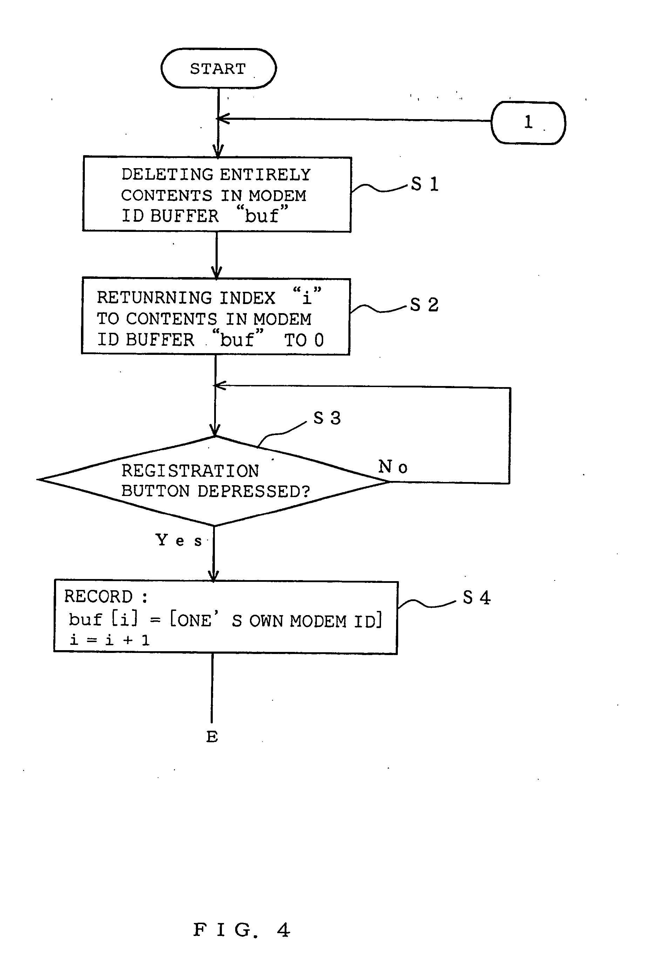

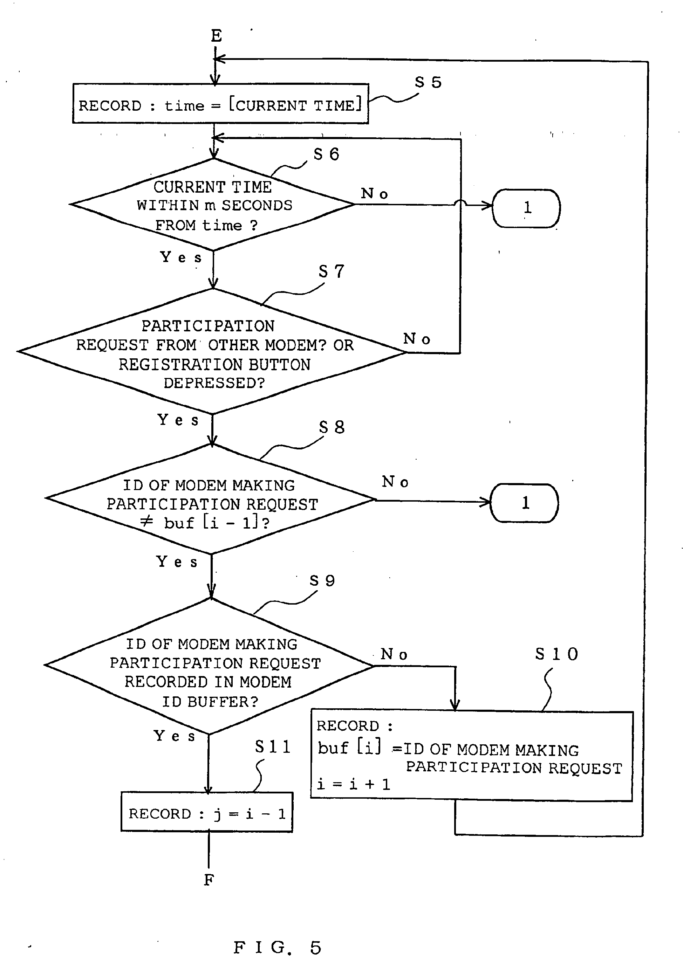

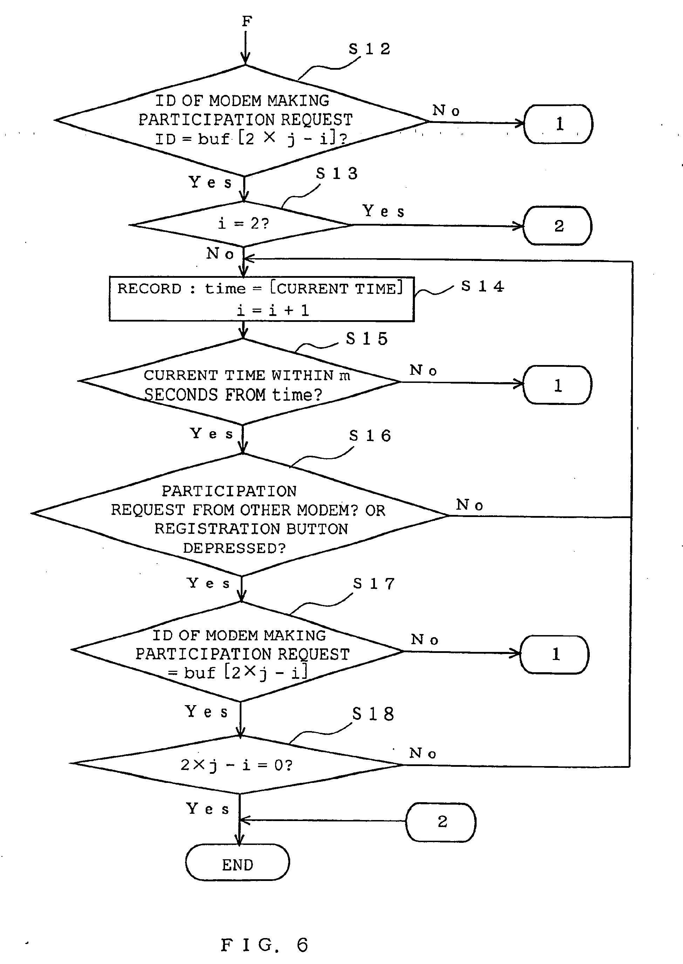

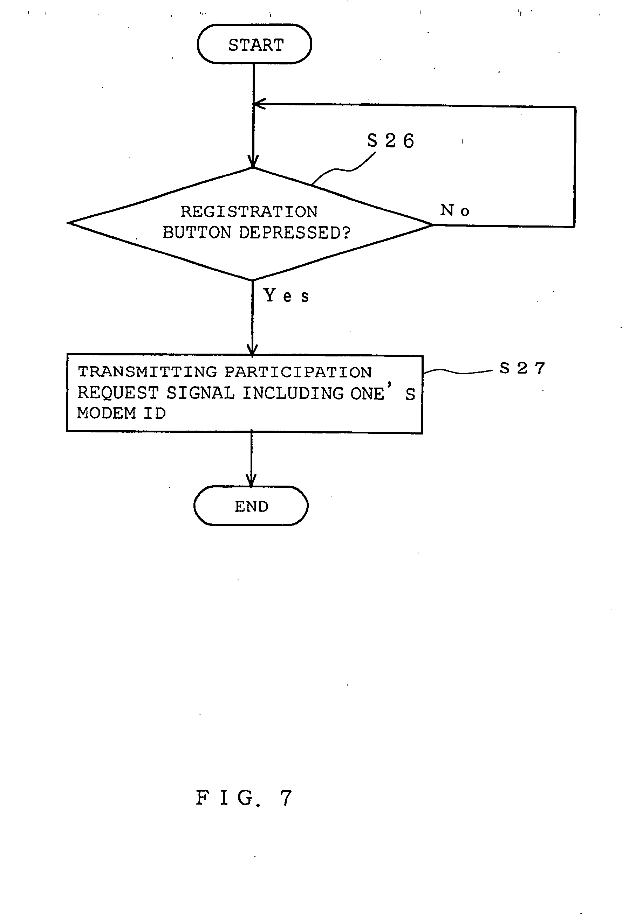

As an example of the above-mentioned registration operation (participation request operation), operations in the internal part of the modem 1 up to registration of the modem 1 in a secure group by constituting a secure group of two modems A-B-A, constituting a secure group of three modems A-B-C-B-A, and constituting of a secure group of four modems A-B-C-D-C-B-A, are described with reference to Figs. 4 to 6, and Fig. 7. Figs. 4 to 6 are flowcharts for explaining operation in the internal part of the modem A, including the case where a registration operation shown in Fig. 3 has been conducted. Note that E of Fig. 4 is connected to E of Fig. 5, F of Fig. 5 is connected to F of Fig. 6 respectively, thereby one complete flowchart being formed as the whole. Fig. 7 is a flowchart for explaining operations in the internal part of the modem B and C in the case where the operation shown in Fig. 3 is conducted.

In step S1 of Fig. 4, contents in the modem ID buffer 4 of the modem A is entirely deleted in response to instruction from the control section 7. Then in step S2, index to the contents in the modem ID buffer 4 of the modem A is initialized.

Thus the buffer is empty, and i = 0

(Making ready for recording the next ID information under the condition that the index is "0".)

Subsequently in step S3, the operation waits for the registration button 2 to be depressed. When the registration button 2 of the modem A is depressed, that is, a participation request (participation request of one's communication device) for participation in a secure group is made, the registration button detecting section 3 detects this participation request and generates a participation request signal. The control section 7 receives this signal, records the modem ID information of the modem A in the modem ID buffer (storage section) in input step S4, and updates an index to the contents in the modem ID buffer 4 of the modem A.
i = 0 buf [0] : MELA

("MELA" is recorded in index "0". MELA is ID information of the modem A.)
i=i+1=0+1=1

(The buffer makes ready for recording the next ID information under the condition that the index is "1".)

Subsequently in step S5, referring to Fig. 5, a current time is recorded by means of the timer 5 in response to instruction from the control section 7. Then by means of the control section 7 and the data processing section 8, in step S6 and step S7, it is monitored whether or not any participation request signal to a secure group is generated from any modem, which is the other modem or the modem A, within m seconds (for example, 60-80 seconds) from the start of step S5. In the case where any participation request signal to the secure group is not generated, it is determined that a grouping operation is interrupted, and the program returns to the first step of the flowchart. On the other hand, in the case where any participation request signal is generated, in step S8, ID information of the modem having generated the participation request signal is compared with the ID information that has been recorded in the modem ID buffer 4 of the modem A immediately before. As a result of the comparison, if both of them are coincident, an invalid grouping operation is determined and the program returns to the first step of the flowchart.

In the case where both of them are not coincident, it is confirmed in step S9 whether or not ID information of the modem having generated the participation request signal is the one that has been already recorded in the modem ID buffer 4 of the modem A. As a result of the confirmation, if the ID information of the modem is not the one that has been already recorded, in step S10, the ID information of the modem having generated the participation request signal is recorded in the modem ID buffer 4 of the modem A, and the index to the contents in the modem ID buffer 4 of the modem A is updated. Then program returns to step S5.
i = 1 buf [1] : MELB

("MELB" is recorded in index "1". MELB is ID information of the modem B.)
i = i + 1 = 1 + 1 = 2

(The buffer makes ready for recording the next ID information under the condition that the index is "2".)

The operations of steps S5 to S9 are repeated again. In the case where the participation request signal is generated, in step S8, ID information of the modem having generated the participation request signal is compared with the ID information that has been recorded in the modem ID buffer 4 of the modem A immediately before. In the case where both of them are not coincident, in step S9, it is confirmed whether or not the ID information of the modem having generated the participation request signal is the one that has been already recorded in the modem ID buffer 4 of the modem A.

As a result of confirmation, if the ID information of the modem is the one that has been already recorded, it is confirmed whether or not this participation request is made in accordance with a correct (right) grouping operation in step S11 and step S12. As a result of the confirmation, if the participation request is not made according to the correct grouping operation, the program returns to the first step of the flowchart. That is,
In the case of A-B-A:

After depressing the registration button of the modem B, (S = 10) i = 2.

When depressing the registration button of the modem A thereafter, still i = 2;
in S11, j = i - 1 = 2 - 1 = 1; and
in S12, buf [2 × j - i] = buf [2 × 1 - 2] = buf [0] = MELA.

In the case where ID information of the modem having made a participation request is not MELA, this means that the program is not executed according to a correct grouping operation and therefore the operation returns to the first step of the flowchart.

On the other hand, in the case where ID information of the modem having made a participation request is MELA, this means the program is executed according to the correct grouping operation. Therefore, whether or not i = 2 is confirmed in step S13, and the program ends.

In short, a time sequence of inputs to the input section of one's communication device and the other communication devices is detected at the control section 7 (i.e., sequence determination section 18 of the control section), and constitution of a secure group between one's communication device and the other communication devices is implemented at the control section 7, when the time sequence of the inputs to the input section of one' s and the other communication devices meets a predetermined specific rule.

### In the case of A-B-C-B-A:

Operations from steps S1 to S10 are the same as in the foregoing case of A-B-A. Thus, the contents of the modem ID buffer 4 are already as follows.
i = 0 buf [0] : MELA
i = 1 buf [1] :MELB; and
i = 2

From step S10, the operations in steps S5 to S9 are repeated again. In the case where any participation request is generated, in step S8, ID information of the modem having generated the participation request, is compared with the ID information that has been recorded in the modem ID buffer 4 immediately before. In the case where both of them are not coincident, in step S9, it is confirmed whether or not the ID information of the modem having generated the participation request is the one that has been already recorded in the modem ID buffer 4 of the modem A.

As a result of confirmation, if the ID information of the modem is not the one that has been already recorded, in step bS10, the ID information of the modem having generated the participation request is recorded in the modem ID buffer 4 of the modem A, the index to the contents in the modem ID buffer 4 of the modem A is updated, and the program returns to step S5.
i = 2 buf [2] : MELC

("MELC" is recorded in index "2". MELC is ID information of the modem C.)
i = i + 1 = 2 + 1 = 3

(The buffer makes ready for recording the next ID information under the condition that the index is "3".)

The operations in steps S5 to S9 are repeated again. In the case where a participation request is generated, in step S8, the ID information of the modem having generated the participation request is compared with the ID information that has been recorded in the modem ID buffer 4 of the modem A immediately before. In the case where both of them are not coincident, in step S9, it is confirmed whether or not the ID information of the modem having generated the participation request is the one that has been already recorded in the modem ID buffer 4 of the modem A.

As a result of the confirmation, if it is the ID that has been recorded already, in steps S11 and S12, it is confirmed whether or not this participation request is made according to a correct grouping operation. As a result of the confirmation, if the participation request is not made according to the correct grouping operation, the program returns to the first step.

After depressing the registration button of the modem C, (S = 10) i = 3.

When depressing the registration button of the modem B thereafter, still i = 3;
in S11, j = i - 1 = 3 - 1 = 2; and
in S12, buf [2 × j - i] = buf [2 × 2 - 3] = buf [1] = MELB

In the case where ID information of the modem having made a participation request is not MELB, the participation request is not made according to the correct grouping operation, and the program returns to the first step of the flowchart.

On the other hand, in the case where ID information of the modem having made a participation request is MELB, the participation request is made according to the correct grouping operation. Therefore, whether or not i = 2 is confirmed in step S13. Since i = 3, the program proceeds to step S14. In this step S14, a current time is recorded by means of the timer 5, and the index to the contents in the modem ID buffer 4 of the modem A is updated. Thus,
i = i + 1 = 3 + 1 = 4

Then, in steps S15 and S16, it is monitored whether or not any participation request signal in a secure group is generated from a modem, which is the other modem or the modem A, within m seconds from the start of step S14. In the case where any participation request in the secure group is not generated, it is determined that a grouping operation is interrupted, and the program returns to the first step of the flowchart. On the other hand, in the case where any participation request is generated, in step S17, it is confirmed whether or not this participation request is made according to a correct grouping operation. As a result of the confirmation, if the participation request is not made according to the correct grouping operation, the program returns to the first step of the flowchart.
j = 2, i = 4
buf [2 × j - i] = buf [2 × 2 - 4] = buf [0] = MELA

In the case where ID information of the modem having made a participation request is not MELA in step S17, the participation request is not made according to the correct grouping operation so that the program returns to the first step of the flowchart.

On the other hand, in the case where ID information of the modem having made a participation request is MELA, the participation request is made according to the correct grouping operation so that the program proceeds to step S18. In this step S18, it is confirmed whether or not this participation request is a participation request from a modem other than the modem A according to the correct grouping operation (i.e., start modem making a participation request in a secure group).
j = 2, i = 4
2 × j - i = 2 × 2 - 4 = 0

As a result of the confirmation, in the case where this participation request is a participation request from a modem other than the modem A according to the correct grouping operation (in the case of NO), the program proceeds to step S14.

In this case, the participation request is the one from the modem A according to the correct grouping operation (it is YES) and therefore the program ends.

In short, a time sequence of inputs to an input section of one's communication device and the other communication devices at the control section 7 (i.e., sequence determination section 18 of the control section) is detected, and constitution of a secure group between one's communication device and the other communication device is implemented at the control section 7, when the time sequence of the inputs to the input section of one' s and the other communication devices meets a predetermined specific rule. ,
In the case of A-B-C-D-C-B-A:

Operations from steps S1 to S10 are the same as in the foregoing case of A-B-C-B-A. Thus, contents of the modem ID buffer 4 are already as follows
i = 0 buf [0] :MELA;
i = 1 buf [1] : MELB;
i = 2 buf [2] : MELC; and
i = 3

From step S10, the operations of steps S5 to S9 are repeated again. In the case where a participation request is generated, in step S8, ID information of the modem having generated the participation request is compared with the ID information that has been recorded in the modem ID buffer 4 of the modem A immediately before. In the case where both of them are not coincident, in step S9, it is confirmed whether or not the ID information of the modem having generated the participation request is the one that has been already recorded in the modem ID buffer 4 of the modem A.

As a result of the confirmation, if the ID information of the modem is not the ID that has been already recorded, in step S10, the ID information of the modem having generated the participation request is recorded in the modem ID buffer 4 of the modem A, the index to content in the modem ID buffer 4 of the modem A is updated, and then the program returns to step S5.
i = 3 buf [3] : MELD

(MELD is ID information of the modem D.)
i = i + 1 = 3 + 1 = 4

The operations in step S5 to step S9 are repeated again. In the case where any participation request is generated, in step S9, it is confirmed whether or not ID information of the modem having generated the participation request is the one that has been already recorded in the modem ID buffer 4 of the modem A.

As a result of confirmation, if the ID information of the modem is the ID that has been already recorded, in step S11 and step S12, it is confirmed whether or not this participation request is made according to the correct grouping operation.

After depressing the registration button of the modem, (S = 10) i = 4.

When depressing registration button of the modem, still i = 4;
in S11, j = i - 1 = 4 - 1 = 3; and
in S12, buf [2 × j - i] = buf [2 × 3 - 4] = buf [2] = MELC.

In the case where ID information of the modem having made a participation request is MELC, the participation request is made according to the correct grouping operation. Therefore, whether or not i = 2 is confirmed in step S13. In this case, i = 4 and therefore the program proceeds to step S14. In the step S14, a current time is recorded by means of the timer 5, and the index to the contents in the modem ID buffer 4 of the modem A is updated.
1 = 1 + 1 = 4 + 1 = 5

Then, in step S15 and step S16, it is monitored whether or not any participation request signal in a secure group is generated from an modem, which is the other modem or the modem A, within m seconds from the start of step S14. In the case where any participation request is generated, in step S17, it is confirmed whether or not this participation request is made according to the correct grouping operation.
j = 3, i = 5
buf [2 × j - i] = buf [2 × 3 - 5] = buf [1] = MELB

In the case where ID information of the modem having generated a participation request is MELB, the participation request is made according to the correct grouping operation and therefore the program proceeds to step S18. In this step S18, it is confirmed whether or not this participation request is a participation request from a modem other than the modem A according to the correct grouping operation (start modem making a participation request in a secure group).
j = 3, i = 5
2 × j - i = 2 × 3 - 5 = 1

As a result of the confirmation, this participation request is a participation request from a modem other than the modem A according to the correct grouping operation (it is NO) and therefore the program proceeds to step S14.

In step S14, a current time is recorded by means of the timer 5, and the index to the contents in the modem ID buffer 4 of the modem A is updated.
i=i+1=5+1=6

Then, in steps S15 and S16, it is monitored whether or not any participation request signal in a secure group is generated from a modem, which is the other modem or the modem A, within m seconds from the start of step S14. In the case where any participation request is generated, in step S17, it is confirmed whether or not this participation request is made according to a correct grouping operation.
j = 3, i = 6
buf [2 × j - i] = buf [2 × 3 - 6] = buf [0] = MELA

In the case where ID information of the modem having generated a participation request is not MELA in step S17, the participation request is not made according to the correct grouping operation and therefore the program returns to the first step of the flowchart.

On the other hand, in the case where ID information of the modem having generated a participation request is MELA, the participation request is made according to the correct grouping operation and therefore the program proceeds to step S18. In this step S18, it is confirmed whether or not this participation request is a participation request from a modem other than the modem A according to the correct grouping operation (start modem making a participation request in a secure group).
j = 3, i = 6
2 × j - i = 2 × 3 - 6 = 0

In this case, the participation request is the one from the modem A according to the correct grouping operation (it is YES) and therefore the program ends.

In short, a time sequence of inputs to an input section of one's and the other communication devices is detected at the control section 7 (i.e., sequence determination section 18 of the control section), and constitution of a secure group between one' s communication device and the other communication devices is implemented at the control section 7, when the time sequence of the inputs to the input section of one's and the other communication devices meets a predetermined specific rule.

Likewise, it is also possible to select not less than five units of specific communication devices and constitute a secure group thereby enabling to implement this constitution easily as well as safely.

In addition, referring to the flowcharts Figs. 4-6 showing operations according to the first embodiment, it is monitored in step S6 or S15 whether or not a participation request signal is made within m seconds. It is also preferable to monitor whether or not the participation request signal is made within a range not less than n seconds and not more than m seconds.

Now, operations in the internal part of the modem Band modem. C are hereinafter described. In step S26 of Fig. 7, the modem B and the modem C monitors respectively whether or not the registration button 2 is depressed. In the case where the registration button 2 is depressed, in step S27, the modem B and modem C transmit a participation request signal to a secure group including one's own modem ID. The modem A receives this participation request signal via the communication line.

Now, grouping of three communication devices of the modem A, modem B and modem C after a grouping operation has completed normally, is described. After completing the grouping operation normally, the modem A, modem B and modem C come to be grouped by encoding information to be communicated by means of public key codes. Thus, it becomes impossible for a modem that does not belong to this group to intercept communication in the group.

In the grouping apparatus of communication devices according to the first embodiment, for the purpose of grouping n numbers of communication devices, depressing the registration button just by 2 × n - 1 times is enough. Thus it is possible to shorten the time period for grouping a large number of communication devices.

Further, to register the communication devices in a secure group, depressing a registration button of respective communication devices just once or twice in a specific sequence is enough. Thus it is easy to record or store operating procedures for registering in the secure group.

Furthermore, to register the communication devices in a secure group, depressing a registration button of respective communication devices just once or twice in a specific sequence is enough. Thus it is possible to reduce occurrence of a problem that registration cannot be implemented due to mistake in timing of depressing the button.

In addition, in order for a third party to intercept communication between the communication devices registered in a secure group, an interrupt operation has to be conducted during the grouping operation of constituting a secure group, and besides the grouping operation including the foregoing interrupt operation has to be implemented according to a correct procedure. However, probability of succeeding in the interrupt operation is very low, and it comes to be extremely difficult for any third party to intercept communication information.

### Embodiment 2.

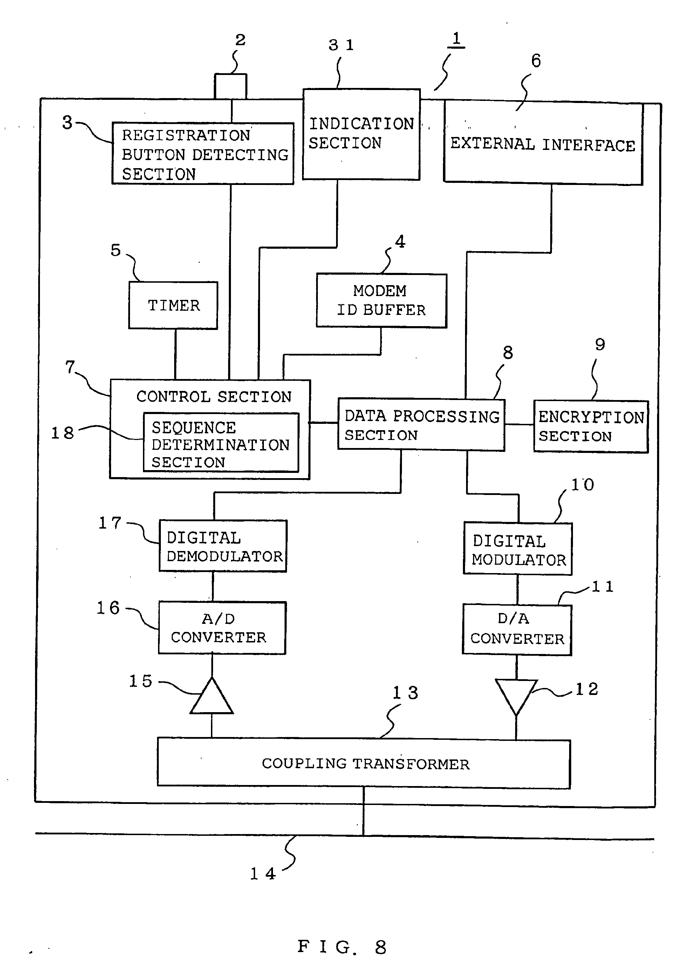

Fig. 8 is a block diagram showing a constitution of a modem according to a second preferred embodiment of this invention. This block diagram shows the one further including an indication section 31 in addition to the constitution of the first embodiment shown in the block diagram of Fig. 1, and this indication section 31 receives signals from the control section 7. When the operation comes to the end, and a grouping operation normally completes referring to the flowcharts showing the operation according to the first embodiment (Figs. 4-6), the indication section 31 indicates number of modems registered in a secure group in response to a signal from the control section 7.

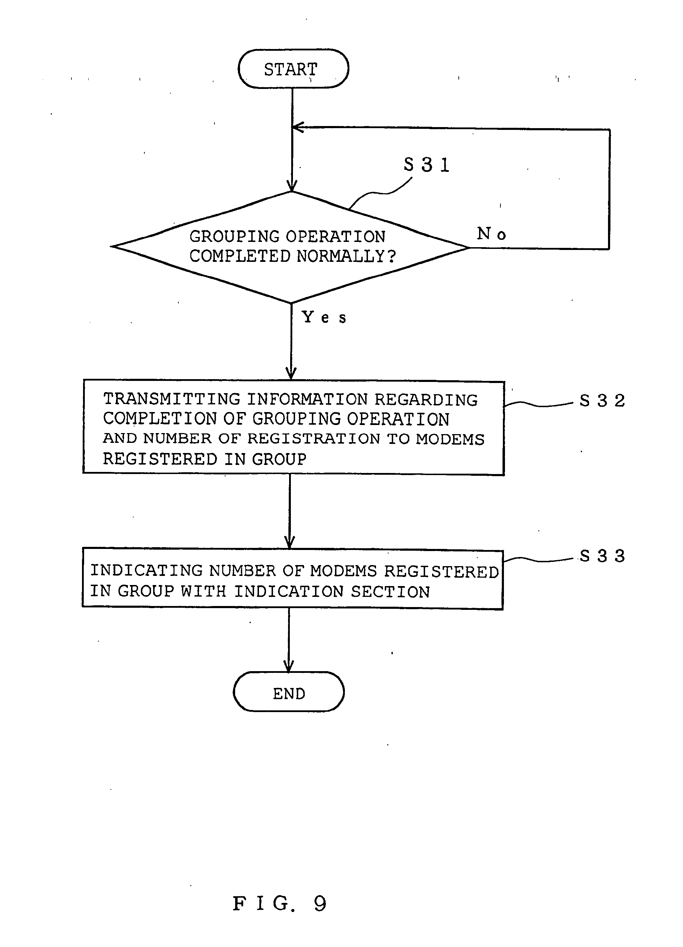

Fig. 9 is a flowchart showing operation of a modem A shown in Fig. 2 according to the second embodiment. When the operation comes to the end, and a grouping operation normally completes referring to the flowcharts (Figs. 4-6) showing the operation according to the first embodiment (when it is YES in step S31), the modem A transmits information regarding the completion of grouping operation and number of registration to the modems registered in the secure group by operation of the control section 7 (step S32). Then, the indication section 31 indicates the number of modems registered in the secure group (step S33).

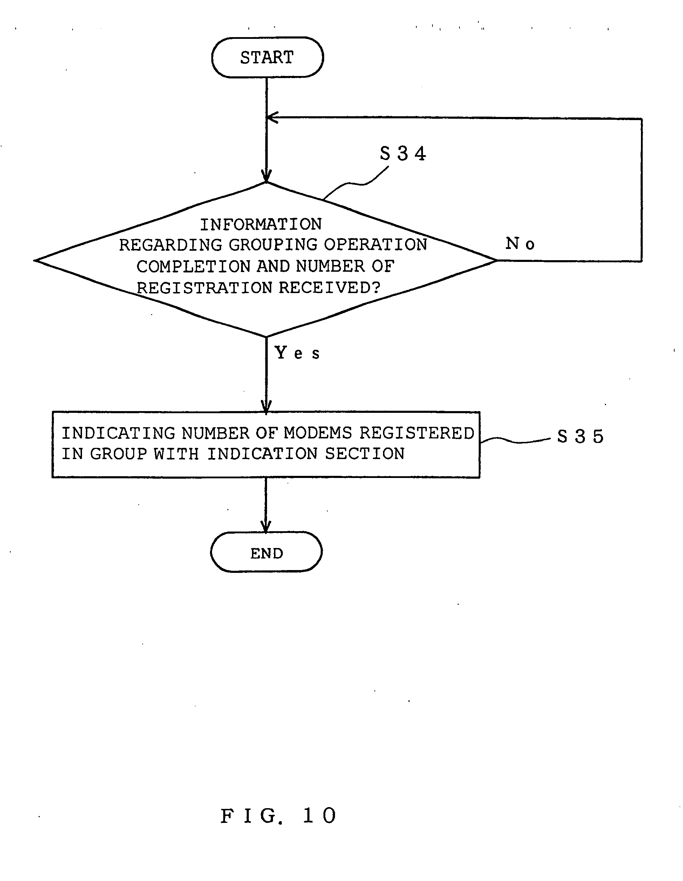

Fig. 10 is a flowchart showing operation of the modem B and the modem C shown in Fig. 2 according to the second embodiment. When the operation comes to the end, and a grouping operation normally completes referring to the flowcharts (Figs. 4-6) showing the operation of the first embodiment, the modem B and the modem C receive from the modem A information regarding the completion of grouping operation and number of registration (YES in step S34). Then, the indication section 31 indicates the number of modems registered in the secure group by operation of the control section 7 (step S35).

In addition, the manner of display by means of the indication section is not particularly limited, and any display manner can be employed on condition that the manner is capable of recognizing the number of communication devices in the form of number of flashing lights, number of points of light, display with numerals, sound, number of sound rumbling, or the like.

### Embodiment 3.

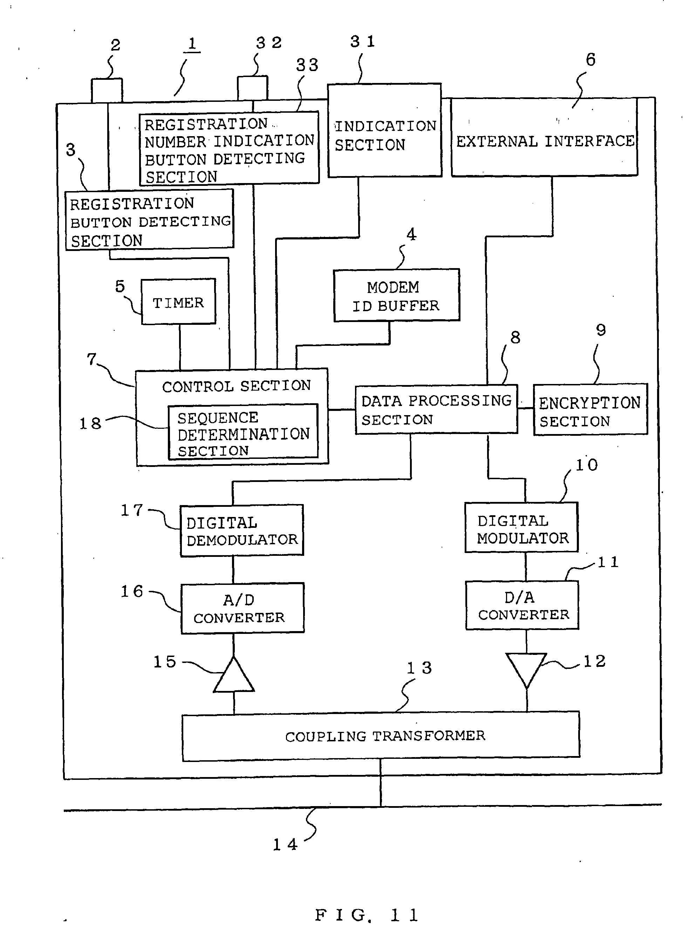

Fig. 11 is a block diagram showing a constitution of a modem according to a third preferred embodiment of this invention. This block diagram shows the one further including a registration number indication button 32 for indicating number of registration in a secure group and a registration number indication button detecting section 33 for detecting number of registration in the secure group, in addition to the constitution of the second embodiment shown in the block diagram of Fig. 8. When depressing the registration number display button 32, the registration number display button detecting section 33 detects the depression and transmits a detection signal to the control section 7.

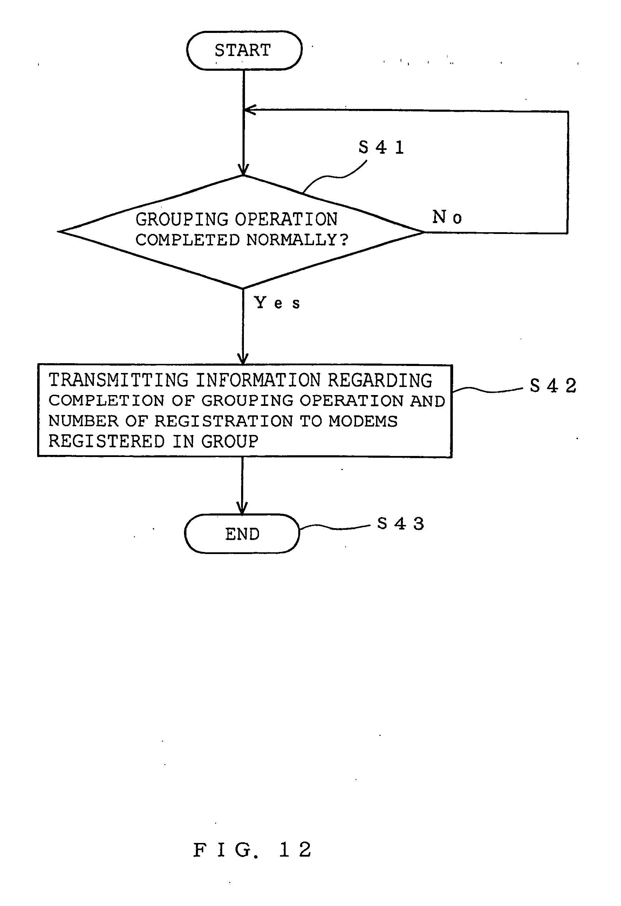

Fig. 12 is a flowchart showing operation of the modem A shown in Fig. 2 according to the third embodiment. When the operation comes to the end, and a grouping operation normally completes in the flowcharts (Figs. 4-6) showing the operation according to the first embodiment (when it is YES in step S41), the modem A transmits information regarding the completion of grouping operation and number of registration to the modems registered in the secure group by operation of the control section 7 (step S42).

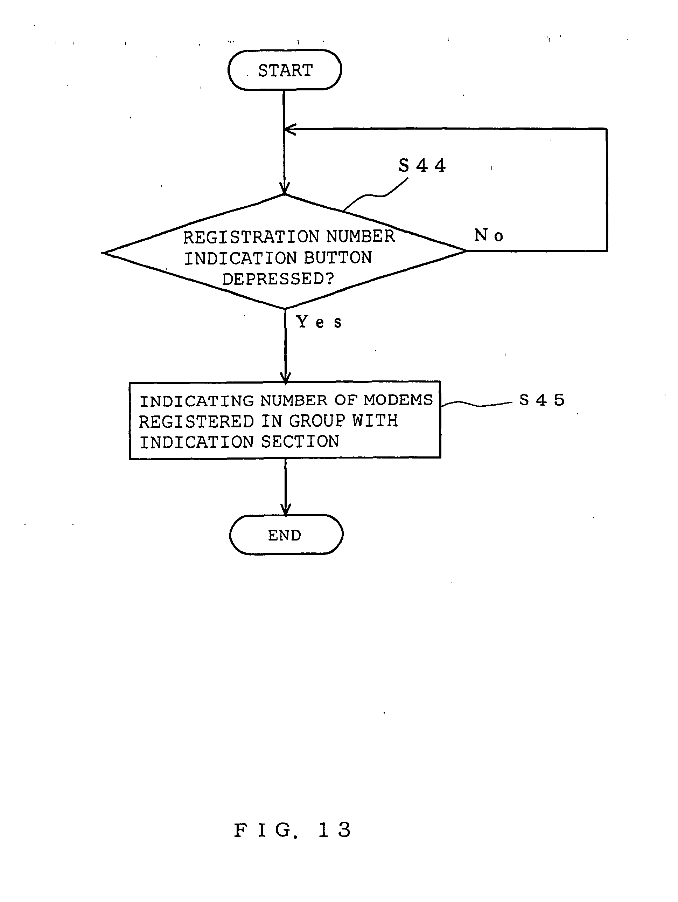

Fig. 13 is a flowchart showing operation of the modem B and the modem C according to the third embodiment. When the operation shown in Fig. 12 comes to the end, information regarding the completion of grouping operation and number of registration is transmitted. Thereafter, when depressing the registration number display button 32 of the modem B and modem C is depressed (when it is YES in step S44), the registration number display button detecting section 33 detects the depression and transmits a detection signal to the control section 7. Further, the display section 31 displays the number of modems registered in the secure group in response to the signal from the control section 7 (step S45).

Thus, by depressing the registration number display button requiring for displaying the number registered in the secure group after the secure group registration operation has ended normally, it is possible to know the number registered in the secure group.

In addition, the manner of display by means of the indication section is not particularly limited, and any display manner can be employed on condition that the manner is capable of recognizing the number of registration in the form of number of flashing lights, number of points of light, display with numerals, sound, number of sound rumbling or the like.

### Embodiment 4.

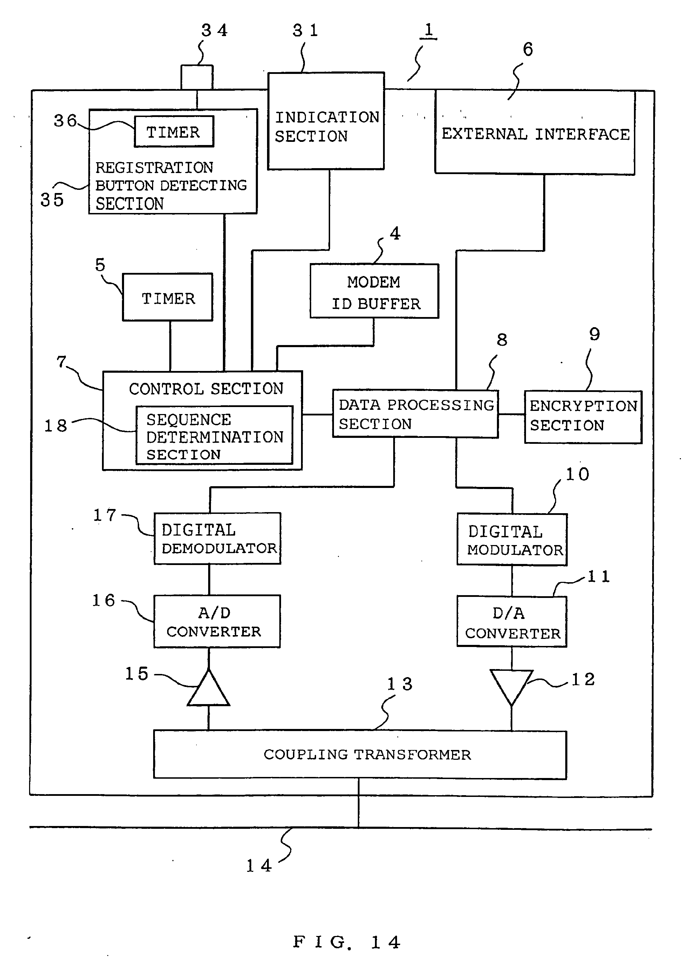

Fig. 14 is a block diagram showing a constitution of a modem according to a fourth preferred embodiment of this invention. This block diagram is the one that is provided with a registration button detecting section 35 including a registration button 34 and a timer 36 instead of the registration button 2 and the registration button detecting section 3 shown in the block diagram of Fig. 8. When detecting by means of the timer 36 that the registration button 34 has been depressed for not longer than a predetermined time period, the registration button detecting section 35 determines this depression as a participation request in a secure group, and transmits a participation request signal to the control section 7. On the other hand, when detecting by means of the timer 36 that the registration button 34 has been depressed for not shorter than a predetermined time period, the registration button detecting section 35 determines this depression as a request for displaying number of communication devices registered in the secure group, and transmits a number display request signal to the control section 7. When the control section 7 receives the number display request signal, the control section 7 causes the display section 31 to display the number of communication devices registered in the secure group.

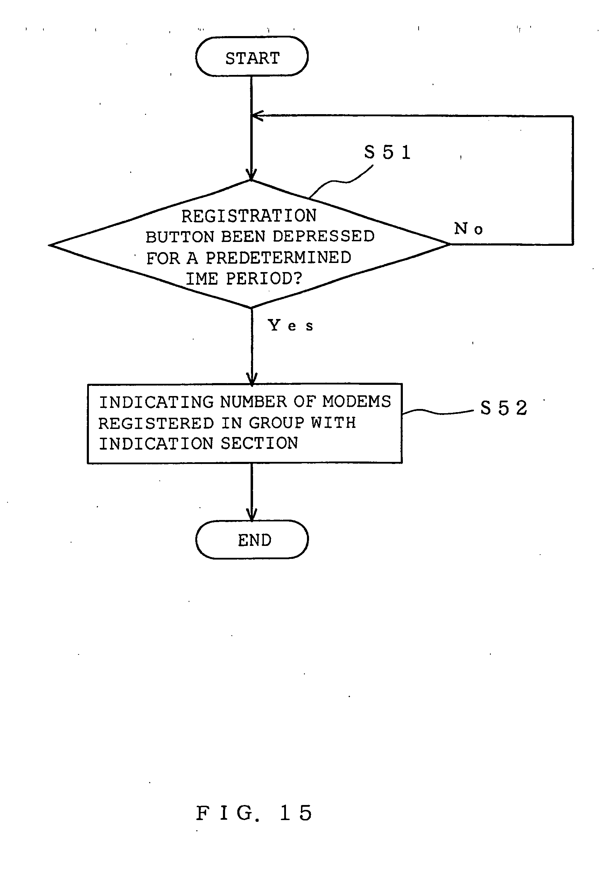

Fig. 15 is a flowchart showing operation of the modem A shown in Fig. 2 according to the fourth embodiment. When the operation comes to the end, a grouping operation has completed normally referring to the flowcharts showing the operation according to the first embodiment (Figs. 4- 6), and thereafter the registration button 34 is depressed for not shorter than a predetermined time period (it is YES in step S51), the display section 33 displays the number of modems registered in the secure group (step S52).

Thus, by depressing the registration button for not shorter than a predetermined time period after completing normally the secure group registration operation, it is possible to know the number registered in the secure group. In this manner, the registration button making a participation request of the modem in the secure group can also be used as a registration button requiring for displaying the number registered in the secure group.

In addition, any operation capable of being discriminated from operation of one depression and release such as double click is acceptable other than the manner of depressing the button for not shorter than a predetermined time period in order to display the number of modems registered in the secure group

While the presently preferred embodiments of the present invention have been shown and described. It is to be understood that these disclosures are for the purpose of illustration and that various changes and modifications may be made without departing from the scope of the invention as set forth in the appended claims.

## Claims

1. A grouping apparatus of communication devices for use in a communication system, in which a plurality of communication devices (21,22,23,24) are connected respectively via a communication medium (14) and capable of communicating with each other, comprising:
an input section (2,3) for generating a participation request signal in response to a participation request for participation in a secure group (29) in order to keep communication between a plurality of specific communication devices (21,22,23) secret;
a receiving section (13,15,16,17) for receiving a participation request signal for participation in said secure group (29), the participation request signal being transmitted from a transmission section (10, 11, 12, 13) of any of the other communication devices (22,23) and generated by an input section (2,3) of said other communication devices (22,23) ;
a processing section (8) for fetching out an ID information of said other communication devices (22,23), from which the participation request is transmitted from said participation request signal received by said receiving section (13,15,16,17);
a storage section (4) for storing ID information of one's communication device,
**characterized in that**
the storage section (4) is adapted to store the ID information of said other communication device (22,23) fetched out by said processing section (8), after determining that the ID information of said other communication device (22,23) is different from the previously stored ID information;
the grouping apparatus further comprising:
a sequence determination section (18) for detecting a time sequence of inputs from one's communication device (21) with ID information and said other communication devices (22,23) with other ID information to the input section (2,3) that generates said participation request signal; and
a control section (7) for implementing constitution of a secure group (29) between said one's communication device (21) and said other communication devices (22,23) based on the stored ID information when a time sequence of the inputs from said one's communication device (21) and said other communication devices (22,23) to said input section meets a predetermined specific rule.

2. The grouping apparatus of communication devices according to claim 1, further comprising a transmission section (10,11,12,13) for transmitting to said communication medium (14) the participation request signal including one's ID information of said communication device (21) based on the participation request made by said input section (2,3).

3. The grouping apparatus of a communication device according to claim 1, wherein constitution of the secure group (29) between one's said communication device (21) and the other said communication device (22,23) is implemented when a time sequence of inputs to said input section (2,3) (of one's communication device (21) and the other said communication devices (22,23) meets a rule of sequence beginning from one's said communication device (21), turning back at the other said communication device, which is the last one to participate in the secure group, and returning to one's said communication device in reverse order thereof.

4. The grouping apparatus of a communication device according to claim 1, wherein constitution of the secure group (29) between one's said communication device (21) and the other said communication device (22,23) is implemented when a time sequence of inputs to said input section (2, 3) of one's communication device (21) and the other said communication devices (22,23) meets a rule of sequence beginning from one's said communication device (21), turning back at the other said communication device, which is the last one to participate in the secure group (29) after double inputs to said input section (2,3) thereat, and returning to one's communication device in reverse order thereof.

5. The grouping apparatus of a communication device according to claim 1, wherein constitution of the secure group (29) between one's said communication device (21) and the other said communication devices (22,23) is implemented when a time sequence of inputs to said input section (2,3) of one's communication device (21) and the other said communication device (22,23) meets a rule of sequence repeating the sequence beginning from one's said communication device (21) and ending at the other said communication device which is the last one to participate in the secure group (29).

6. The grouping apparatus of a communication device according to claim 1, further comprising an input interval measurement section (5) for measuring a time interval of the inputs to said input section (2,3) that generate said participation request signal from one's communication device (21) and the other said communication devices (22,23), wherein constitution of the secure group (29) between one's said communication device (21) and the other said communication devices (22,23) is implemented when a time interval of the inputs to said input section (2,3) meets a predetermined specific rule.

7. The grouping apparatus of a communication device according to any of claims 1 to 6, further comprising an indication section (31) for displaying number of said communication devices (21,22,23) registered in the secure group (29).

8. The grouping apparatus of a communication device according to claim 7, wherein a button of said input section (2,3) for making a participation request in the secure group (29) and the button (34) for displaying number of said communication devices (21,22,23) registered in the secure group (29) are integrally formed into one button; and the participation request in the secure group (29) and a request for displaying number of said communication devices (21,22,23) registered in the secure group (29) are discriminated based on a manner of depressing said button.

9. A grouping method of communication devices for use in a communication system, in which a plurality of communication devices (21,22,23,24) are connected respectively via a communication medium (14) and capable of communicating with each other, comprising the steps of:
inputting a participation request for participation in a secure group (29) in order to keep communication between a plurality of specific communication devices (21,22,23) secret and generating a participation request signal;
receiving the participation request signal transmitted in response to an input of the participation request for participation in said secure group (29) from any of the other communication devices (22,23);
fetching out an ID information of the other said communication devices (22,23), from which the participation request is transmitted, from said received participation request signal;
storing ID information of one's communication device,
**characterized by**
storing said fetched-out ID information of the other said communication devices (22,23) after determining that the ID information of said other communication devices (22,23) is different from the previously stored ID information;
detecting a time sequence of inputs that generate said participation request signal from one's communication device (21) with ID information and the other said communication devices (22,23) with other ID information; and
implementing constitution of a secure group between the one's said communication device (21) and the other said communication devices (22,23) based on the stored ID information, when said time sequence of the inputs meets a predetermined specific rule.

10. The grouping method of a communication device according to claim 9, wherein constitution of the secure group (29) between one's said communication device (21) and the other said communication devices (22,23) is implemented when a time sequence of the inputs generating said participation request signal from one's communication device (21) and the other said communication devices (22,23) meets a rule of sequence beginning from one's said communication device (21), turning back at the other said communication device, which is the last one to participate in the secure group (29), and returning to one's said communication device (21).

11. The grouping method of a communication device according to claim 9 or 10, wherein a time interval of the inputs generating said participation request signal from one's communication device (21) and the other said communication devices (22,23) is measured, and constitution of the secure group (29) between one's said communication device (21) and the other said communication device (22,23) is implemented when said time interval of the inputs meets a predetermined specific rule.

12. A grouping program of communication devices for use in a communication system, in which a plurality of communication devices (21,22,23,24) are connected respectively via a communication medium (14) and capable of communicating with each other, comprising the steps of:
generating a participation request signal as well as generating one's ID information of a communication device (21) in response to an input of a participation request for participation in a secure group (29) in order to keep communication between a plurality of specific communication devices (21,22,23) secret;
fetching out an ID information of any of the other communication devices (22,23), from which the participation request is transmitted, from said participation request signal in response to receipt of the participation request signal, the participation request signal being inputted and transmitted from the other communication devices (22,23)for participation in said secure group (29);
storing ID information of one's communication device,
**characterized by**
storing said fetched-out ID information of the other said communication devices (22,23) after determining that the ID information of said other communication devices (22,23) is different from the previously stored ID information;
detecting a time sequence of inputs that generate said participation request signal from one's communication device (21) with ID information and the other said communication devices (22,23) with other ID information; and
implementing constitution of a secure group between the one's said communication device (21) and the other said communication devices (22,23) basedonsaidIDinformation, when said time sequence of the input meets a predetermined specific rule.

## Patentansprüche

1. Eine Gruppiervorrichtung von Kommunikationsgeräten zur Verwendung in einem Kommunikationssystem, in dem eine Mehrzahl von Kommunikationsgeräten (21, 22, 23, 24) entsprechend über ein Kommunikationsmedium (14) verbunden sind und in der Lage sind, miteinander zu kommunizieren, umfassend:
einen Eingabeabschnitt (2, 3) zum Erzeugen eines Partizipierungsanforderungssignals in Ansprechen auf eine Partizipierungsanforderung zur Partizipierung in einer sicheren Gruppe (29), um eine Kommunikation zwischen einer Mehrzahl von spezifischen Kommunikationsgeräten (21, 22, 23) geheim zu halten;
einen Empfangsabschnitt (13, 15, 16, 17) zum Empfangen eines Partizipierungsanforderungssignals zur Partizipierung in der sicheren Gruppe (29), wobei das Partizipierungsanforderungssignal übertragen wird von einem Übertragungsabschnitt (10, 11, 12, 13) von einem der anderen Kommunikationsgeräte (22, 23) und erzeugt wird durch den Eingabeabschnitt (2, 3) der anderen Kommunikationsgeräte (22, 23);
einen Verarbeitungsabschnitt (8) zum Holen einer ID-Information von den anderen Kommunikationsgeräten (22, 23), von denen die Partizipierungsanforderung übertragen wird, von dem Partizipierungsanforderungssignal, das von dem Empfangsabschnitt (13, 15, 16, 17) empfangen wird; einen Speicherabschnitt (4) zum Speichern einer ID-Information von einem Kommunikationsgerät,
**dadurch gekennzeichnet, dass**
der Speicherabschnitt (4) ausgebildet ist zum Speichern der ID-Information von dem anderen Kommunikationsgerät (22, 23), geholt von dem Verarbeitungsabschnitt (8), nach einem Bestimmen, dass die ID-Information des anderen Kommunikationsgeräts (22, 23) unterschiedlich ist von der vorher gespeicherten ID-Information;
die Gruppiervorrichtung weiterhin umfasst:
einen Sequenzbestimmungsabschnitt (18) zum Detektieren einer Zeitsequenz von Eingaben von einem Kommunikationsgerät (21) mit ID-Information und den anderen Kommunikationsgeräten (22, 23) mit anderer ID-Information an den Eingabeabschnitt (2, 3), der das Partizipierungsanforderungssignal erzeugt; und
einen Steuerabschnitt (7) zum Implementieren einer Zusammensetzung einer sicheren Gruppe (29) zwischen dem einen Kommunikationsgerät (21) und den anderen Kommunikationsgeräten (22, 23), basierend auf der gespeicherten ID-Information, wenn eine Zeitsequenz der Eingaben von dem einen Kommunikationsgerät (21) und den anderen Kommunikationsgeräten (22, 23) an den Eingabeabschnitt eine vorbestimmte spezifische Regel erfüllt.

2. Die Gruppiervorrichtung von Kommunikationsgeräten nach Anspruch 1, ferner umfassend einen Übertragungsabschnitt (10, 11, 12, 13) zum Übertragen an das Kommunikationsmedium (14) des Partizipierungsanforderungssignals einschließlich der einen ID-Information des Kommunikationsgeräts (21), basierend auf der Partizipierungsanforderung, durchgeführt durch den Eingabeabschnitt (2, 3).

3. Die Gruppiervorrichtung von einem Kommunikationsgerät nach Anspruch 1, wobei eine Zusammensetzung der sicheren Gruppe (29) zwischen dem einen Kommunikationsgerät (21) und dem anderen Kommunikationsgerät (22, 23) implementiert wird, wenn eine Zeitsequenz von Eingaben an den Eingabeabschnitt (2, 3) von dem einen Kommunikationsgerät (21) und den anderen Kommunikationsgeräten (22, 23) eine Regel einer Sequenz erfüllt, beginnend von dem einen Kommunikationsgerät (21), umkehrend bei dem anderen Kommunikationsgerät, das das letzte ist, das in der sicheren Gruppe teilnimmt, und zurückkehrend zu dem einen Kommunikationsgerät in umgekehrter Reihenfolge derselben.

4. Die Gruppiervorrichtung von einem Kommunikationsgerät nach Anspruch 1, wobei die Zusammensetzung der sicheren Gruppe (29) zwischen dem einen Kommunikationsgerät (21) und dem anderen Kommunikationsgerät (22, 23) implementiert wird, wenn eine Zeitsequenz von Eingaben an den Eingabeabschnitt (2, 3) von dem einen Kommunikationsgerät (21) und den anderen Kommunikationsgeräten (22, 23) eine Regel einer Sequenz erfüllt, beginnend von dem einen Kommunikationsgerät (21), umkehrend bei dem anderen Kommunikationsgerät, das das letzte ist, das in der sicheren Gruppe (29) partizipiert bzw. teilnimmt , nach doppelten Eingaben an den Eingabeabschnitt (2,3), und zurückkehrend zu dem einen Kommunikationsgerät in umgekehrter Reihenfolge derselben.

5. Die Gruppiervorrichtung von einem Kommunikationsgerät nach Anspruch 1, wobei die Zusammensetzung der sicheren Gruppe (29) zwischen dem einen Kommunikationsgerät (21) und den anderen Kommunikationsgeräten (22, 23) implementiert wird, wenn eine Zeitsequenz von Eingaben an den Eingabeabschnitt (2, 3) von dem einen Kommunikationsgerät (21) und dem anderen Kommunikationsgerät (22, 23) eine Regel einer Sequenz erfüllt, die die Sequenz wiederholt, beginnend von dem einen Kommunikationsgerät (21) und endend bei dem anderen Kommunikationsgerät, das das letzte ist, das an der sicheren Gruppe (29) teilnimmt.

6. Die Gruppiervorrichtung von einem Kommunikationsgerät nach Anspruch 1, ferner umfassend einen Eingabeintervallmessabschnitt (5) zum Messen eines Zeitintervalls der Eingaben an den Eingabeabschnitt (2, 3), der das Partizipierungsanforderungssignal von dem einen Kommunikationsgerät (21) und den anderen Kommunikationsgeräten (22, 23) erzeugt, wobei die Zusammensetzung der sicheren Gruppe (29) zwischen dem einen Kommunikationsgerät (21) und den anderen Kommunikationsgeräten (22, 23) implementiert wird, wenn ein Zeitintervall der Eingaben an den Eingabeabschnitt (2, 3) eine vorbestimmte spezifische Regel erfüllt.

7. Die Gruppiervorrichtung von einem Kommunikationsgerät nach einem der Ansprüche 1 bis 6, ferner umfassend einen Hinweisabschnitt (31) zum Anzeigen der Anzahl der Kommunikationsgeräte (21, 22, 23), die in der sicheren Gruppe (29) registriert sind.

8. Die Gruppiervorrichtung von einem Kommunikationsgerät nach Anspruch 7, wobei eine Taste des Eingabeabschnitts (2, 3) zum Durchführen einer Partizipierungsanforderung in der sicheren Gruppe (29) und die Taste (34) zum Anzeigen der Anzahl der Kommunikationsgeräte (21, 22, 23), die in der sicheren Gruppe (29) registriert sind, als eine Taste integral gebildet sind; und die Partizipierungsanforderung in der sicheren Gruppe (29) und eine Anforderung zum Anzeigen der Anzahl der Kommunikationsgeräte (21, 22, 23), die in der sicheren Gruppe (29) gebildet sind, werden unterschieden, basierend auf einer Art und Weise eines Eindrückens der Taste.

9. Ein Gruppierverfahren von Kommunikationsgeräten zur Verwendung in einem Kommunikationssystem, in dem eine Mehrzahl von Kommunikationsgeräten (21,22, 23, 24) entsprechend über ein Kommunikationsmedium (14) verbunden werden und in der Lage sind, miteinander zu kommunizieren, umfassend die Schritte:
Eingeben einer Partizipierungsanforderung zum Partizipieren in einer sicheren Gruppe (29), um eine Kommunikation zwischen einer Mehrzahl von spezifischen Kommunikationsgeräten (21, 22, 23) geheim zu halten und ein Partizipierungsanforderungssignal zu erzeugen;
Empfangen des Partizipierungsanforderungssignals, das in Ansprechen auf eine Eingabe der Partizipierungsanforderung zur Partizipierung in der sicheren Gruppe (29) übertragen wird von einem der anderen Kommunikationsgeräte (22, 23) ;
Holen einer ID-Information von dem anderen der Kommunikationsgeräte (22, 23), von dem die Partizipierungsanforderung übertragen wird, von dem empfangenen Partizipierungsanforderungssignal; Speichern von ID-Information von einem Kommunikationsgerät,
**gekennzeichnet durch**
Speichern der geholten ID-Information von dem anderen der Kommunikationsgeräte (22, 23), nach einem Bestimmen, dass die ID-Information der anderen Kommunikationsgeräte (22, 23) unterschiedlich ist von der vorher gespeicherten ID-Information;
Detektieren einer Zeitsequenz von Eingaben, die das Partizipierungsanforderungssignal von einem Kommunikationsgerät (21) mit ID-Information und den anderen der Kommunikationsgeräte (22, 23) mit anderer ID-Information erzeugen; und
Implementieren einer Zusammensetzung einer sicheren Gruppe zwischen dem einen Kommunikationsgerät (21) und den anderen der Kommunikationsgeräte (22, 23), basierend auf der gespeicherten ID-Information, wenn die Zeitsequenz der Eingaben eine vorbestimmte spezifische Regel erfüllt.

10. Das Gruppierverfahren von einem Kommunikationsgerät nach Anspruch 9, wobei die Zusammensetzung der sicheren Gruppe (29) zwischen dem einen Kommunikationsgerät (21) und den anderen Kommunikationsgeräten (22, 23) implementiert wird, wenn eine Zeitsequenz der Eingaben, erzeugend das Partizipierungsanforderungssignal von einem Kommunikationsgerät (21) und den anderen der Kommunikationsgeräte (22, 23), eine Regel einer Sequenz erfüllt, beginnend von dem einen Kommunikationsgerät (21), umkehrend zu dem anderen Kommunikationsgerät, das das letzte ist, das an der sicheren Gruppe (29) teilnimmt, und zurückkehrend zu dem einen Kommunikationsgerät (21).

11. Das Gruppierverfahren von einem Kommunikationsgerät nach Anspruch 9 oder 10, wobei ein Zeitintervall der Eingaben, erzeugend das Partizipierungsanforderungssignal von einem Kommunikationsgerät (21) und den anderen der Kommunikationsgeräte (22, 23), gemessen wird, und eine Zusammensetzung der sicheren Gruppe (29) zwischen dem einen Kommunikationsgerät (21) und dem anderen der Kommunikationsgeräte (22, 23) implementiert wird, wenn das Zeitintervall der Eingaben eine vorbestimmte spezifische Regel erfüllt.

12. Ein Gruppierprogramm von Kommunikationsgeräten zur Verwendung in einem Kommunikationssystem, in dem eine Mehrzahl von Kommunikationsgeräten (21, 22, 23, 24) entsprechend über ein Kommunikationsmedium (14) verbunden werden und in der Lage sind, miteinander zu kommunizieren, umfassend die Schritte:
Erzeugen eines Partizipierungsanforderungssignals, wie auch Erzeugen einer ID-Information eines Kommunikationsgeräts (21) in Ansprechen auf eine Eingabe einer Partizipierungsanforderung zur Partizipierung in einer sicheren Gruppe (29), um eine Kommunikation zwischen einer Mehrzahl von spezifischen Kommunikationsgeräten (21, 22, 23) geheim zu halten;
Holen einer ID-Information von einem der anderen Kommunikationsgeräte (22, 23), von dem die Partizipierungsanforderung übertragen wird, von dem Partizipierungsanforderungssignal in Ansprechen auf einen Empfang des Partizipierungsanforderungssignals, wobei das Partizipierungsanforderungssignal eingegeben wird, und übertragen wird von den anderen Kommunikationsgeräten (22, 23) zur Partizipierung in der sicheren Gruppe (29);
Speichern von ID-Information von einem Kommunikationsgerät,
**gekennzeichnet durch**
Speichern der geholten ID-Information von dem anderen der Kommunikationsgeräte (22, 23), nach einem Bestimmen, dass die ID-Information von den anderen Kommunikationsgeräten (22, 23) unterschiedlich ist von der vorher gespeicherten ID-Information;
Detektieren einer Zeitsequenz von Eingaben, die das Partizipierungsanforderungssignal von einem Kommunikationsgerät (21) mit ID-Information und den anderen der Kommunikationsgeräte (22, 23) mit anderer ID-Information erzeugen; und
Implementieren einer Zusammensetzung einer sicheren Gruppe zwischen dem einen Kommunikationsgerät (21) und den anderen der Kommunikationsgeräte (22, 23), basierend auf der ID-Information, wenn die Zeitsequenz der Eingabe eine vorbestimmte spezifische Regel erfüllt.

## Revendications

1. Appareil pour grouper des dispositifs de communication pour un usage dans un système de communication, dans lequel une pluralité de dispositifs de communication (21, 22, 23, 24) sont connectés respectivement par le biais d'un moyen de communication (14) et ont la possibilité de communiquer les uns avec les autres, comprenant :
une section d'entrée (2, 3) pour produire un signal de demande de participation en réponse à une demande de participation pour participer à un groupe sécurisé (29) de façon à maintenir secrète une communication entre une pluralité de dispositifs de communication spécifiques (21, 22, 23) ;
une section de réception (13, 15, 16, 17) pour recevoir un signal de demande de participation pour participer au dit groupe sécurisé (29), le signal de demande de participation étant transmis depuis une section de transmission (10, 11, 12, 13) de l'un quelconque des autres dispositifs de communication (22, 23) et étant produite par une section d'entrée (2, 3) desdits autres dispositifs de communication (22, 23) ;
une section de traitement (8) pour rechercher des informations d'identification desdits autres dispositifs de communication (22, 23), à partir desquels la demande de participation est transmise, à partir dudit signal de demande de participation reçu par ladite section de réception (13, 15, 16, 17) ;
une section de stockage (4) pour stocker des informations d'identification d'un dispositif de communication ;
**caractérisé en ce que** :
la section de stockage (4) est adaptée pour stocker les informations d'identification desdits autres dispositifs de communication (22, 23) recherchées par ladite section de traitement (8), après qu'il a été déterminé que les informations d'identification desdits autres dispositifs de communication (22, 23) étaient différentes des informations d'identification précédemment stockées ;
l'appareil de groupement comprenant en outre :
une section de détermination de séquence (18) pour détecter une séquence temporelle d'entrées à partir de l'un des dispositifs de communication (21) avec des informations d'identification et desdits autres dispositifs de communication (22, 23) avec d'autres informations d'identification vers la section d'entrée (2, 3) qui produit ledit signal de demande de participation ; et
une section de commande (7) pour mettre en oeuvre la constitution d'un groupe sécurisé (29) entre ledit un des dispositifs de communication (21) et lesdits autres dispositifs de communication (22, 23) sur la base des informations d'identification stockées quand une séquence temporelle des entrées dudit un des dispositifs de communication (21) et desdits autres dispositifs de communication (22, 23) vers ladite section d'entrée satisfait une règle spécifique prédéterminée.

2. Appareil pour grouper des dispositifs de communication selon la revendication 1, comprenant en outre une section de transmission (10, 11, 12, 13) pour transmettre vers ledit moyen de communication (14) le signal de demande de participation comprenant des informations d'identification dudit communication dispositif (21) sur la base de la demande de participation faite par ladite section d'entrée (2, 3).

3. Appareil pour grouper d'un dispositif de communication selon la revendication 1, dans lequel la constitution du groupe sécurisé (29) entre ledit un des dispositifs de communication (21) et lesdits autres dispositifs de communication (22, 23) est mise en oeuvre quand une séquence temporelle d'entrées vers ladite section d'entrée (2, 3) (de l'un des dispositifs de communication (21) et desdits autres dispositifs de communication (22, 23) satisfait une règle de séquence qui débute par ledit un des dispositifs de communication (21), qui retourne au niveau dudit un autre des dispositifs de communication, qui est le dernier à participer au groupe sécurisé, et qui revient vers ledit un des dispositifs de communication en suivant la procédure dans l'ordre inverse.

4. Appareil pour grouper d'un dispositif de communication selon la revendication 1, dans lequel la constitution du groupe sécurisé (29) entre ledit un des dispositifs de communication (21) et lesdits autres dispositifs de communication (22, 23) est mise en oeuvre quand une séquence temporelle d'entrées vers ladite section d'entrée (2, 3) de l'un des dispositifs de communication (21) et desdits autres dispositifs de communication (22, 23) satisfait une règle de séquence qui débute par ledit un des dispositifs de communication (21), qui retourne au niveau dudit un autre des dispositifs de communication, qui est le dernier à participer au groupe sécurisé (29) après des entrées doubles vers ladite section d'entrée (2, 3) à ce niveau, et qui revient vers ledit un des dispositifs de communication en suivant la procédure dans l'ordre inverse.

5. Appareil pour grouper d'un dispositif de communication selon la revendication 1, dans lequel la constitution du groupe sécurisé (29) entre ledit un des dispositifs de communication (21) et lesdits autres dispositifs de communication (22, 23) est mise en oeuvre quand une séquence temporelle d'entrées vers ladite section d'entrée (2, 3) de l'un des dispositifs de communication (21) et desdits autres dispositifs de communication (22, 23) satisfait une règle de séquence qui répète la séquence qui débute par ledit un des dispositifs de communication (21) et qui se termine au niveau dudit un autre des dispositifs de communication qui est le dernier à participer au groupe sécurisé (29).

6. Appareil pour grouper d'un dispositif de communication selon la revendication 1, comprenant en outre une section de mesure d'un intervalle d'entrée (5) pour mesurer un intervalle de temps des entrées vers ladite section d'entrée (2, 3) qui produit ledit signal de demande de participation à partir de l'un des dispositifs de communication (21) et desdits autres dispositifs de communication (22, 23), dans lequel la constitution du groupe sécurisé (29) entre ledit un des dispositifs de communication (21) et lesdits autres dispositifs de communication (22, 23) est mise en oeuvre quand un intervalle de temps des entrées vers ladite section d'entrée (2, 3) satisfait une règle spécifique prédéterminée.

7. Appareil pour grouper d'un dispositif de communication selon l'une quelconque des revendications 1 à 6, comprenant en outre une section d'indication (31) pour afficher un numéro desdits dispositifs de communication (21, 22, 23) enregistrés dans le groupe sécurisé (29).

8. Appareil pour grouper d'un dispositif de communication selon la revendication 7, dans lequel une touche de ladite section d'entrée (2, 3) pour faire une demande de participation au groupe sécurisé (29) et la touche (34) pour afficher un numéro desdits dispositifs de communication (21, 22, 23) enregistrés dans le groupe sécurisé (29) sont réalisées d'un seul tenant pour ne constituer qu'une seule et même touche ; et la demande de participation au groupe sécurisé (29) et une demande pour afficher un numéro desdits dispositifs de communication (21, 22, 23) enregistrés dans le groupe sécurisé (29) sont différenciées sur la base de la façon dont on appuie sur ladite touche.

9. Procédé pour grouper des dispositifs de communication pour un usage dans un système de communication, dans lequel une pluralité de dispositifs de communication (21, 22, 23, 24) sont connectés respectivement par le biais d'un moyen de communication (14) et ont la possibilité de communiquer les uns avec les autres, le procédé comprenant les étapes consistant à :
entrer une demande de participation pour participer à un groupe sécurisé (29) de façon à maintenir secrète une communication entre une pluralité de dispositifs de communication spécifiques (21, 22, 23) et à produire un signal de demande de participation ;
recevoir le signal de demande de participation transmis en réponse à une entrée de la demande de participation pour participer au dit groupe sécurisé (29) en provenance de l'un quelconque desdits autres dispositifs de communication (22, 23) ;
rechercher des informations d'identification desdits autres dispositifs de communication (22, 23), à partir desquels la demande de participation est transmise, à partir dudit signal de demande de participation reçu ;
stocker des informations d'identification de l'un des dispositifs de communication ;
**caractérisé par** les étapes consistant à :
stocker lesdites informations d'identification recherchées desdits autres dispositifs de communication (22, 23) après qu'il a été déterminé que les informations d'identification desdits autres dispositifs de communication (22, 23) étaient différentes des informations d'identification précédemment stockées ;
détecter une séquence temporelle d'entrées qui produit ledit signal de demande de participation à partir de l'un des dispositifs de communication (21) avec des informations d'identification et desdits autres dispositifs de communication (22, 23) avec d'autres informations d'identification ; et
mettre en oeuvre une constitution d'un groupe sécurisé entre ledit un des dispositifs de communication (21) et lesdits autres dispositifs de communication (22, 23) sur la base des informations d'identification stockées quand ladite séquence temporelle des entrées satisfait une règle spécifique prédéterminée.

10. Procédé pour grouper d'un dispositif de communication selon la revendication 9, dans lequel la constitution du groupe sécurisé (29) entre ledit un des dispositifs de communication (21) et lesdits autres dispositifs de communication (22, 23) est mise en oeuvre quand une séquence temporelle des entrées qui produit ledit signal de demande de participation à partir de l'un des dispositifs de communication (21) et desdits autres dispositifs de communication (22, 23) satisfait une règle de séquence qui débute par ledit un des dispositifs de communication (21), qui retourne au niveau dudit un autre des dispositifs de communication, qui est le dernier à participer au groupe sécurisé (29), et qui revient vers ledit un des dispositifs de communication (21)

11. Procédé pour grouper d'un dispositif de communication selon la revendication 9 ou 10, dans lequel un intervalle de temps des entrées qui produit ledit signal de demande de participation à partir de l'un des dispositifs de communication (21) et desdits autres dispositifs de communication (22, 23) est mesuré, et une constitution du groupe sécurisé (29) entre ledit un des dispositifs de communication (21) et lesdits autres dispositifs de communication (22, 23) est mise en oeuvre quand ledit intervalle de temps des entrées satisfait une règle spécifique prédéterminée.

12. Programme pour grouper des dispositifs de communication pour un usage dans un système de communication, dans lequel une pluralité de dispositifs de communication (21, 22, 23, 24) sont connectés respectivement par le biais d'un moyen de communication (14) et ont la possibilité de communiquer les uns avec les autres, le programme comprenant les étapes consistant à :
produire un signal de demande de participation et produire une parmi des informations d'identification d'un dispositif de communication (21) en réponse à une entrée d'une demande de participation pour participer à un groupe sécurisé (29) de façon à maintenir secrète une communication entre une pluralité de dispositifs de communication spécifiques (21, 22, 23) ;
rechercher des informations d'identification de l'un quelconque des autres dispositifs de communication (22, 23), à partir desquels la demande de participation est transmise, à partir dudit signal de demande de participation en réponse à la réception du signal de demande de participation, le signal de demande de participation étant entré et transmis depuis les autres dispositifs de communication (22, 23) pour participer au dit groupe sécurisé (29) ;
stocker des informations d'identification de l'un des dispositifs de communication ;
**caractérisé par** les étapes consistant à :
stocker lesdites informations d'identification recherchées desdits autres dispositifs de communication (22, 23) après qu'il a été déterminé que les informations d'identification desdits autres dispositifs de communication (22, 23) étaient différentes des informations d'identification précédemment stockées ;
détecter une séquence temporelle d'entrées qui produit ledit signal de demande de participation à partir de l'un des dispositifs de communication (21) avec des informations d'identification et desdits autres dispositifs de communication (22, 23) avec d'autres informations d'identification ; et
mettre en oeuvre une constitution d'un groupe sécurisé entre ledit un des dispositifs de communication (21) et lesdits autres dispositifs de communication (22, 23) sur la base desdites informations d'identification quand ladite séquence temporelle des entrées satisfait une règle spécifique prédéterminée.
